# EUROPEAN PATENT APPLICATION

(11) **EP 2 589 323 A1**
(43) Date of publication of application: **08.05.2013**
(21) Application number: 11187984.7
(22) Date of filing: 04.11.2011
(51) Int. Cl.: A47J 31/54

(54) **Fully automated tea machine**

(71) Applicant: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(57) **Abstract**

An electrical household appliance comprising at least one receptacle for receiving heated water, a removable water tank (13) positioned at a height relative to a base portion of said appliance body (5), said water tank (13) being in communication with at least one fluid containment means (37) extending to said base portion and connecting at said base portion to at least a second fluid containment means (36), the latter extending to a height above said base portion and dispensing heated water to said at least one receptacle (23, 25). Said first and said second fluid containment means (36, 37) function as combined vessels having inner spaces in communication with each other and said second fluid containment means (36) extending from said base portion to a height above said base portion comprises heating means arranged longitudinally through said second fluid containment means (36) for heating water throughout the same.

## Description

### Technical Field of the Invention

The present invention relates to a tea preparing apparatus and more particularly to a double function automatic tea machine. The boiled-water supply device can heat the cold-water to boiling point in very short time by glass heating tubes, and then output the drinkable boiled-water through steam and water separating method.

### Background of the Invention

Tea is traditionally consumed on a daily basis in large quantities in the country of the applicant. A good flavor tea is believed to be prepared by way of boiling water in a first receptacle and steeping tea leaves in hot water in a second receptacle.

A common problem of automated tea preparing machines is that they provide only a limited automation by which water is boiled in a first receptacle and then kept warm therein as long as preferred to allow brewing of tea leaves in a second top receptacle. Therefore, to complete brewing, the user himself must add water to the top receptacle from the boiling receptacle; which means a step which is merely user dependant to the extent that in the absence of user intervention, the whole tea preparing process is aborted is in question.

Nevertheless, it is observed that tea consumers are not reluctant to involve in the tea preparing process and yet prefer such "half-automated" tea preparing machines to conventional non-electrical tea preparing methods. A fully automated tea preparing apparatus having a reasonable price tag and which can transfer boiled water to the top receptacle where dry tea leaves lie is yet believed to be a major step toward consumer satisfaction.

To this end, the present invention provides a tea machine having instant brewing function according to which instantly heated water is automatically transferred to a brewing receptacle without user intervention. The system of the invention is advantageous that brewing water is heated such rapidly that no thermal loss as well as time loss is in question.

The heating arrangement of the invention provides no medium causing heat energy accumulation, thereby also enabling rapid cooling of the water, which in turn helps in avoiding potential burn hazards.

The heating arrangement of the invention ensures that only as much water as desired is heated and no unnecessary energy loss is caused.

### Objects of the Invention

Primary object of the present invention is to provide an electrical tea machine which is fully automated to the extent that it can carry out both boiling and brewing operations without user intervention being necessitated.

Another object of the present invention is to provide a fully automated tea machine ensuring instantaneous heating of the brewing water.

Another object of the present invention is to provide a fully automated tea machine in which only as much water as desired is heated and no unnecessary energy loss is caused.

### Summary of the Invention

The present invention proposes a domestic appliance and specifically a tea machine having a first receptacle containing plant leaves to be brewed and a second receptacle for directly serving hot water.

The tea preparation apparatus of the invention comprises a cold water tank for storing water to be heated. Said cold water tank is associated with a water supply device under the same and is in fluid communication with said water supply device through a valve, Said fluid communication is only enabled when said tank is put in its place.

Said water supply device is a reservoir storing a limited amount of water and feeding it through a feeding tube. Water flow from said water supply device is dependent on the elimination of vacuum in said water tank. The vacuum is released by introducing air into said water tank. To that end, an air inlet is opened when water in said water supply device is drained through said feeding tube and room is available for the air to fill the passage into said water tank. Air passage is blocked when there is no water drainage from said water supply device and when water level therein is as high as to block the entrance of the air passage into said water tank.

The feeding tube and heater tubes function as combined vessels having inner spaces in communication with each other. To that end, water level in said feeding tube rise in response to water transfer from said heater tubes into at least one receptacle Water transfer from said heater tubes into two receptacles may be achieved through an outlet valve selectively transferring hot water to respective outlets.

The combined vessels principle heating system of the present invention is realized by means of telescopically arranged metal tubes between which a substantially small distance is longitudinally left whereby water present around the outer tube in a manner to be delimited by the inner tube, which also comprises lengthwise electrical resistances.

A hot water reservoir receiving hot water is in fluid communication with two separate tubular segments such that while the upper tubular segment is intended for collecting water vapor, the lower segment transfers hot water. A higher configured vapor outlet ensure that water vapor loses its energy to the relatively larger upper part of said hot water reservoir by condensation and loses its efficacy in agitating hot water discharged from said lower segment.

### Brief Description of the Figures

The figures whose brief explanation are herewith provided are solely intended for providing a better understanding of the present invention and is as such not intended to define the scope of protection or the context in which said scope is interpreted in the absence of the description.
Fig. 1 demonstrates a planar front view of the tea machine according to the present invention.

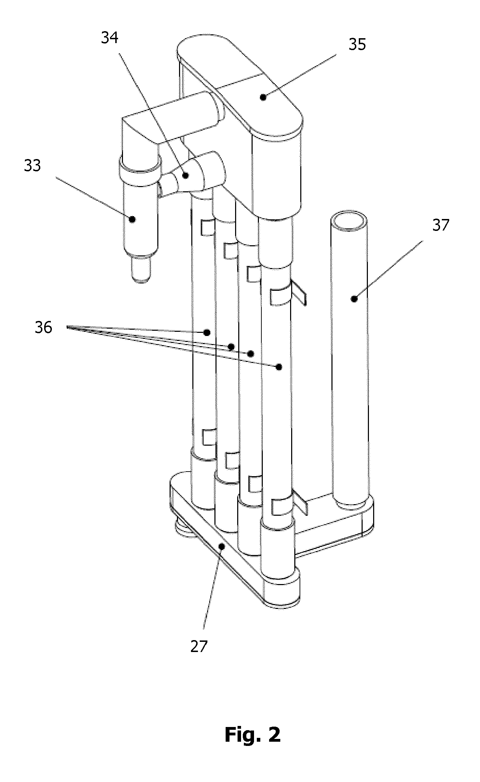

Fig. 2 demonstrates a perspective view of the combined vessels according to the present invention.

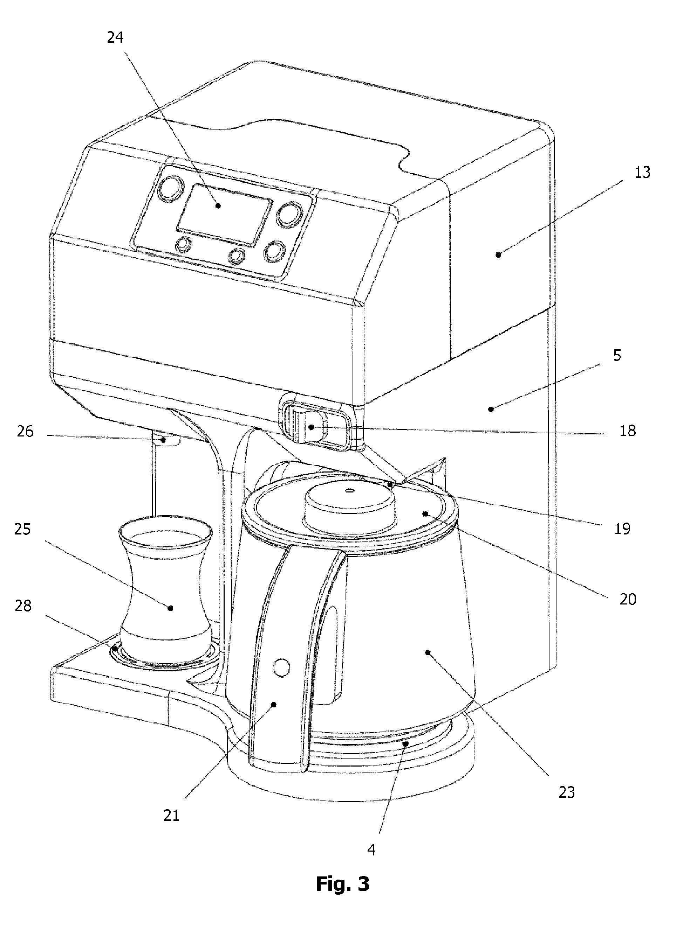

Fig. 3 demonstrates a perspective view of the tea machine according to the present invention.
Fig. 4 demonstrates a lateral cross-sectional view of the tea machine according to the present invention.
Fig. 5 demonstrates a perspective view of the combined vessels together with the brewing receptacle according to the present invention.

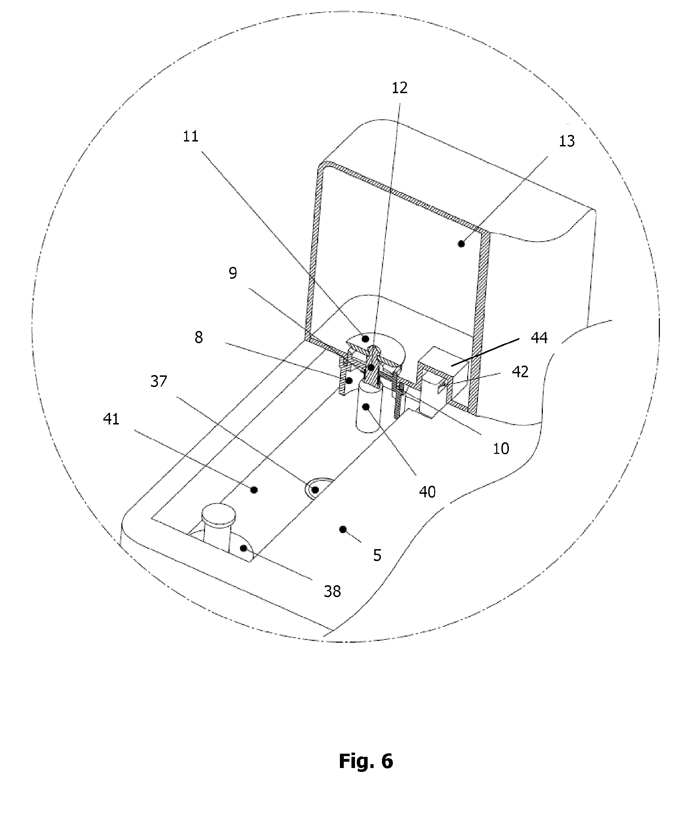

Fig. 6 demonstrates an inner perspective view of the water tank together with the water supply device according to the present invention.
Fig. 7 demonstrates a lateral cross-sectional view of the water supply valve according to the present invention.

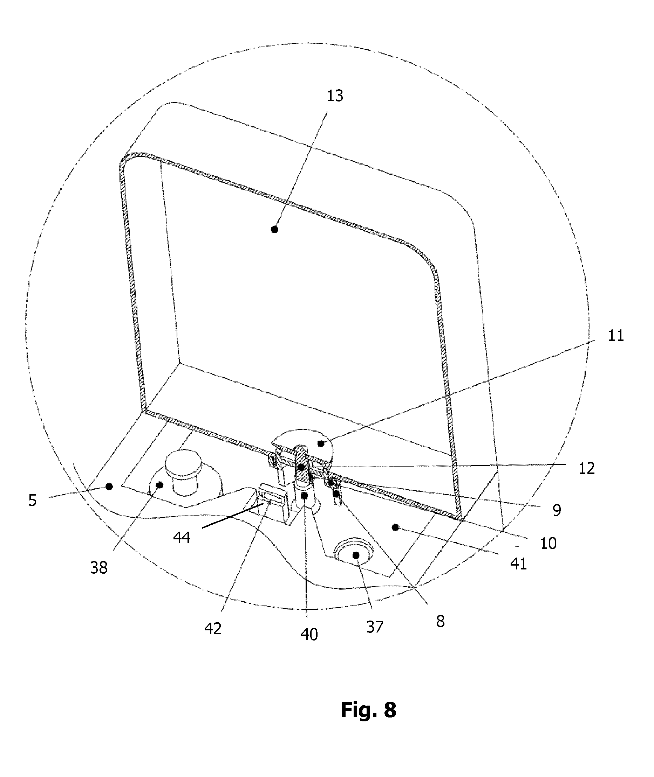

Fig. 8 demonstrates an inner perspective view of the water tank together with the water supply device according to the present invention.

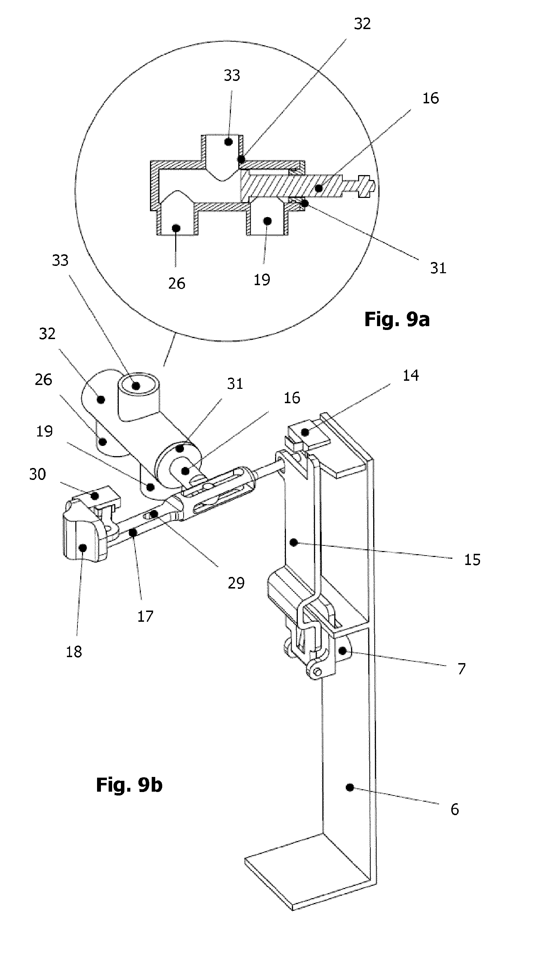

Fig. 9a demonstrates a lateral cross-sectional view of the outlet valve and Fig. 9b demonstrates a perspective view of the same according to the present invention.
Fig. 10 demonstrates a lateral cross-sectional view of the water level sensor according to the present invention.
Fig. 11 demonstrates a perspective view of the combined vessels according to the preferred embodiment of the present invention.

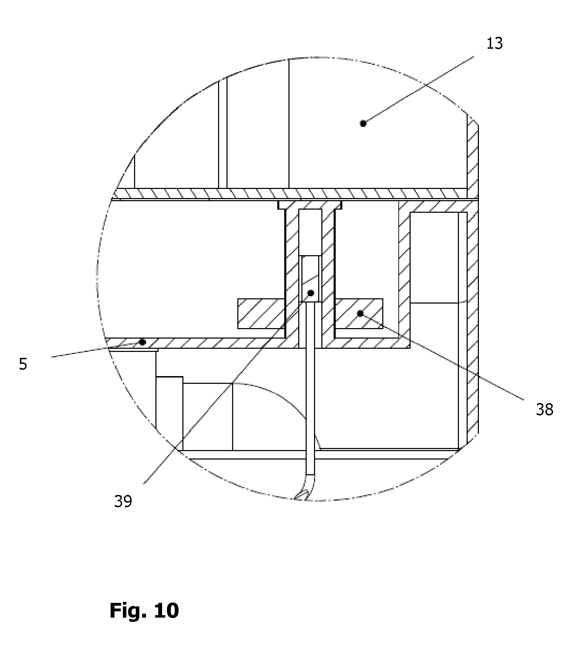

Fig. 10 demonstrates a lateral cross-sectional view of the tea machine according to the preferred embodiment of the present invention.

### Detailed Description of the Invention

Referring now to the figures outlined above, the present invention proposes an electrical household appliance for preparing tea or any other brewable herbal substance. The appliance comprises a brewing receptacle (23) in which tea leaves are placed and brewed by adding hot water accordingly. Said brewing receptacle's (23) correct position is sensed by a microswitch.

The heating arrangement of the tea preparation apparatus comprises a first set of electrical heating means (36) in the form of film heaters coated around a plurality of quartz glass tubes.

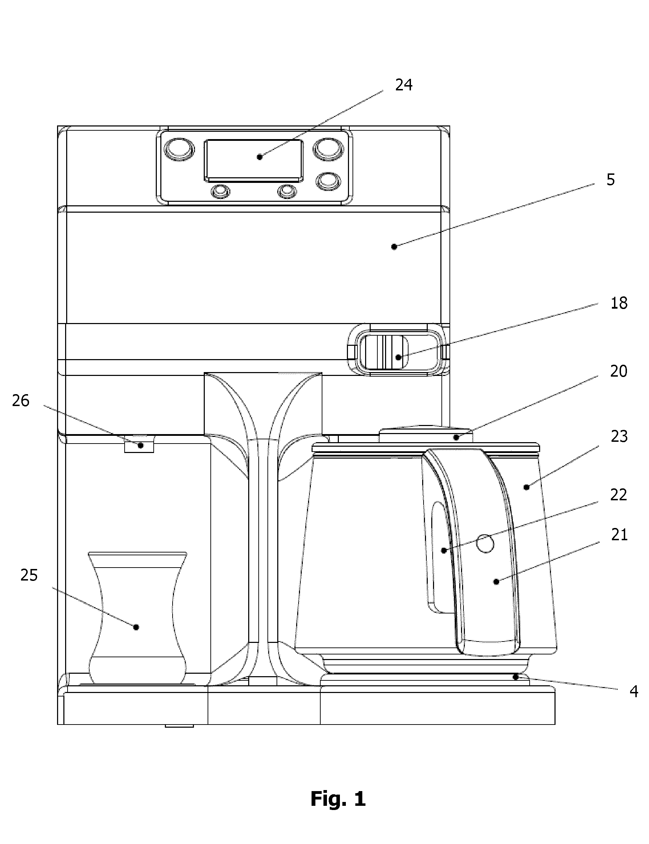

Referring to Fig. 1, the brewing receptacle (23) comprises a handle (21) joined to the brewing receptacle (23) body by means of a longitudinal portion (22). It further comprises a lid (20) and an electrical heater base (4), said base (4) comprising an electrical connector (2) with a PTC resistance (1).

The tea preparing apparatus according to the invention comprises an electronic control unit (24) with a display, allowing a user start the apparatus automatically at a specified time or manually.

The tea preparation apparatus of the invention comprises a cold water tank (13) for storing water to be heated. Said cold water tank (13) is associated with a water supply device (41) located under the same and is in fluid communication with said water supply device (41) through a valve (8) having an axial spring element (9) which moves an axial valve piston (12) axially down, thereby closing fluid openings; for instance when a user removes said cold water tank (13) to refill it with water. Said fluid openings are opened only when said valve (8) is placed on a valve pin (40) integral to the apparatus body (5), such that said valve piston (12) is moved axially up against the force of said spring element (9) also displacing a sealing element (11) to allow fluid communication. An O-ring element (10) is used to avoid water leakage when said cold water tank (13) is removed for filling.

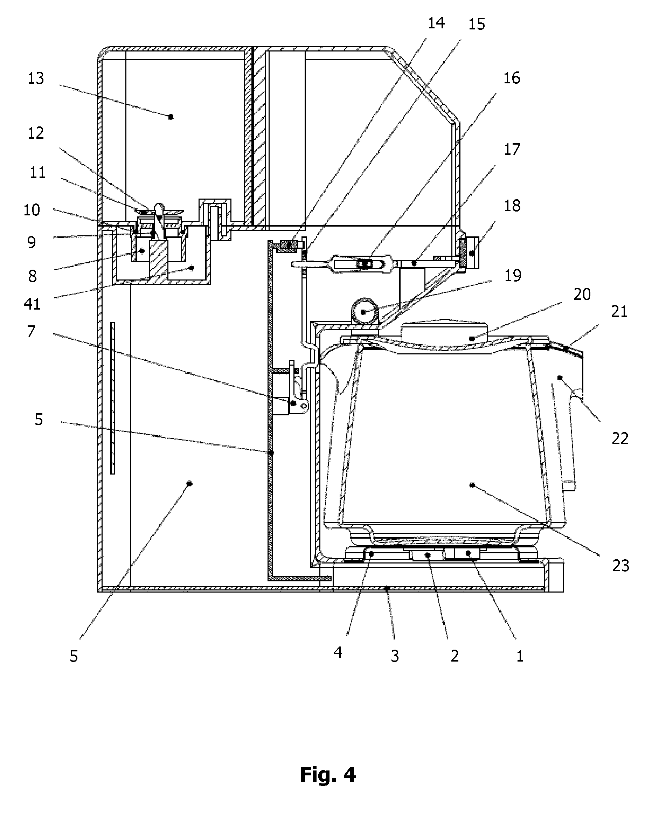

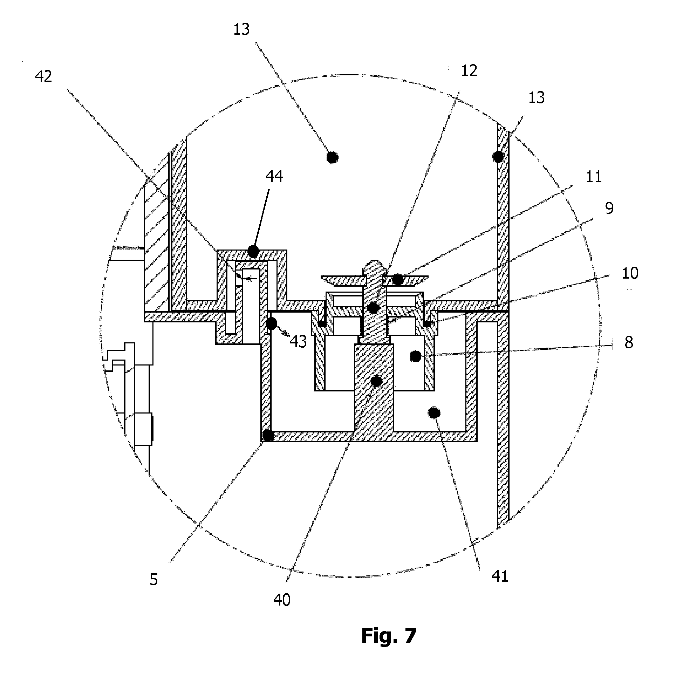

Said water supply device (41) as shown in Fig. 4 is a reservoir storing a limited amount of water and feeding it through a feeding tube (37). Water flow from said water supply device (41) is dependent on the elimination of vacuum in said water tank (13). As vacuum is established in said water tank (13), flow into said water supply device (41) through said valve (8) is interrupted. The vacuum is released by introducing air into said water tank (13) as shown in Fig. 7. Air allowed into the body (5) of the apparatus reaches an air inlet (42) which is opening to said water tank (13) to release vacuum. To that end, said air inlet (42) is only opened when water in said water supply device (41) is drained through said feeding tube (37) and room is available for the air to fill the passage into said water tank (13). Air passage is blocked when there is no water drainage from said water supply device (41) and when water level therein is as high as to block the entrance (43) of the air passage into said water tank (13).

The feeding tube (37) and heater tubes (36) function as combined vessels having inner spaces in communication with each other. To that end, water level in said feeding tube (37) rise in response to water transfer from said heater tubes (36) into a brewing receptacle (23) or hot water receptacle (25) through a brewing outlet (19) and a hot water outlet (26) respectively. Water transfer from said heater tubes (36) into said receptacles (23, 25) is achieved through an outlet valve (32) selectively transferring hot water to said outlets (19, 26) as explained below.

Said quartz glass heater tubes (36) are coated with a metal oxide heating film at the surface, forming a conductive heating glass container which heats itself and water with substantive thermal efficiency. Advantage of heater film coated glass tubes lies in that instant heating is achieved as no heat loss occurs and also instant cooling is in question since no medium other than thin wall glass tubes is present to accumulate heat energy. Heating films for coating heat resistant glass are currently available in the market and those can also be purchased in the form of heater film coated cylindrical glass tubes with desired diameters. However, the combined vessels principle heating system of the present invention can also be realized by means of telescopically arranged metal tubes between which a substantially small distance is longitudinally left whereby water present around the inner tube comprising lengthwise electrical resistances is delimited by the outer tube. This configuration also provides the same instant heating and cooling effect. On the other hand, a single tube around which an electrical resistance is wrapped can also provide effective heating although no instantaneous transfer of water through siphoning action will be the case.

Hot water transfer occurs when water in said heating tubes (36) is heated and thereupon conveyed from said tubes (37) to a hot water reservoir (35). At the same time, said emptied feeding tube (37) is refilled with water as water level declining in said water supply device (41) allows the air to reach said air inlet (42) to release vacuum in said water tank (13), thereby restarting water transfer from therefrom to said feeding tube (37) through said water supply device (41).

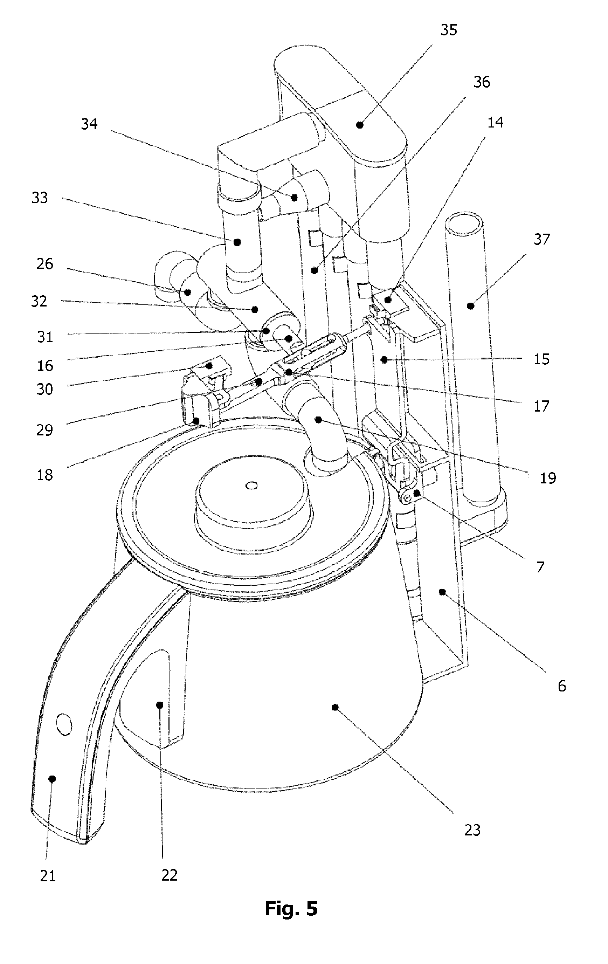

Said hot water reservoir (35) is in fluid communication with two separate tubular segments (33, 34). While the upper tubular segment (33) is intended for collecting water vapor, the lower segment (34) transfers hot water. As shown in Fig. 5, a higher configured vapor outlet (33) ensure that water vapor loses its energy to the relatively larger upper part of said hot water reservoir (35) by condensation and loses its efficacy in agitating hot water discharged from said lower segment (34).

Hot water then reaches said outlet valve (32), which selectively transfers hot water to said brewing outlet (19) and said hot water outlet (26). The preferred embodiment of the apparatus according to the present invention only comprises one outlet for brewing purpose. However, a second outlet allowing dispensing instant hot water can also be provided.

Said outlet valve (32) comprises an outlet valve piston (16) axially positioned by an end portion (31). Said outlet valve (32) is controlled by a control button (18). Said control button (18) is associated with a connection arm (17), the latter controlling both said outlet valve piston (16) and a brewing receptacle (23) mechanism arm (15). Said brewing receptacle (23) mechanism arm (15) pushes a brewing receptacle (23) microswitch (14) when said brewing receptacle (23) is in its place and said control button (18) is set to provide hot water for said brewing receptacle (23). Said electronic control unit (24) energizes said heater tubes (36) when said brewing receptacle (23) microswitch (14) is set to the "On" position as explained above. On the other hand, said brewing receptacle (23) microswitch (14) is in its "Off" position when said control button (18) is set to hot water dispensing position. In this way, the hot water microswitch (30) is in its "On" position and said outlet valve piston (16) blocks said brewing outlet (19) and opens said hot water outlet (26).

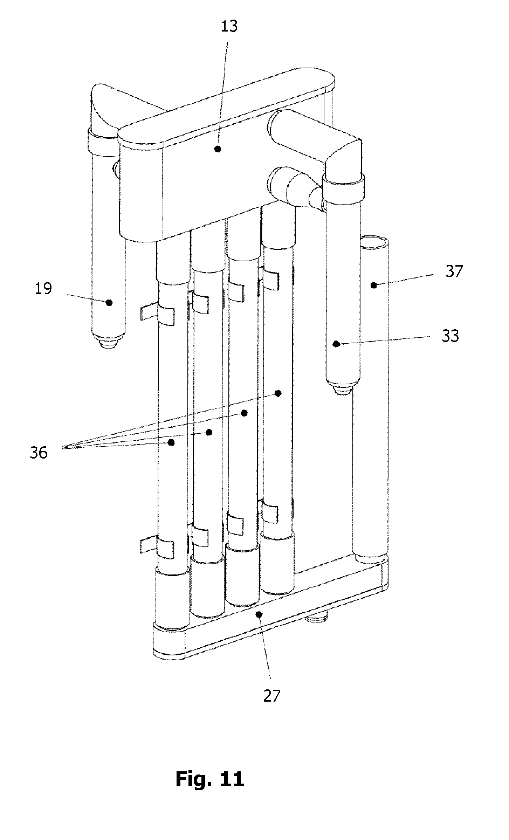

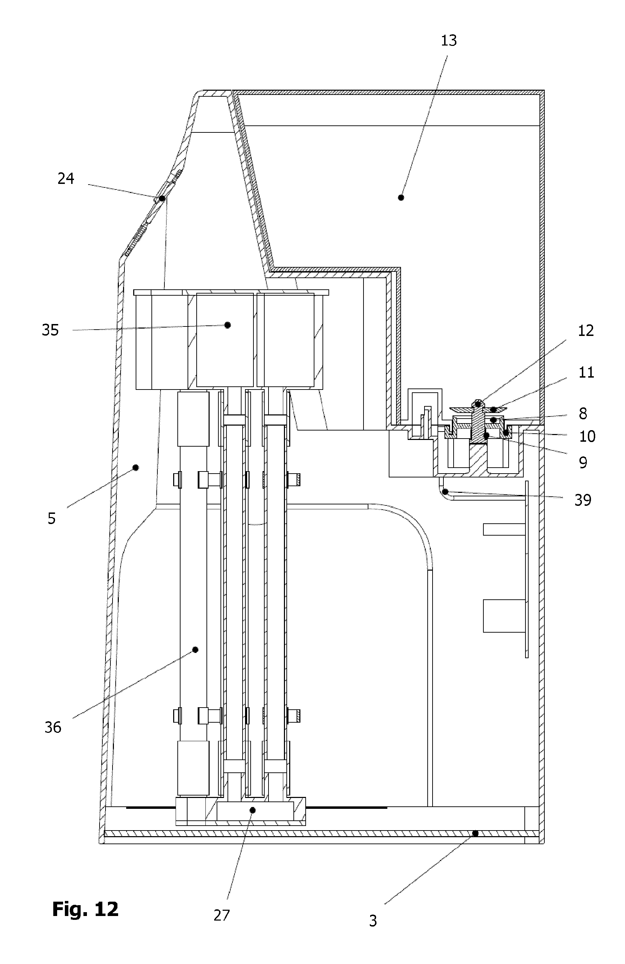

The preferred embodiment of the tea preparation apparatus according to the invention as shown in Fig. 11 features a simpler construction involving no outlet valve (32). To this end, respective heater tubes (36) are used for each of said brewing receptacle (23) and said hot water receptacle (25). Accordingly, said hot water reservoir (35) is designed in the form of two separate divisions, each division being in fluid communication with respective receptacles (23, 25). Water reaching a distribution reservoir (27) then rises only in energized heating tubes (36) associated with respective receptacles (23, 25) according to the operation mode set by the user.

The present invention further provides a conventional security arrangement according to which a water level sensor (39) in the form of a reed switch is tripped by a magnet (38) attached to a small float. In the absence of water in said water supply device (41) said electronic control unit (24) typically discontinues powering of said electrical heaters (36) to avoid electrical hazards.

In a nutshell, the present invention proposes an electrical household appliance comprising at least one receptacle for receiving heated water and a removable water tank (13) positioned at a height relative to a base portion of said appliance body (5). Said water tank (13) is in communication with at least one fluid containment means (37) extending to said base portion and connecting at said base portion to at least a second fluid containment means (36), the latter extending to a height above said base portion and dispensing heated water to said at least one receptacle (23, 25). Said first and said second fluid containment means (36, 37) function as combined vessels having inner spaces in communication with each other. Said second fluid containment means (36) extending from said base portion to a height above said base portion comprises heating means arranged longitudinally through said second fluid containment means (36) for heating water throughout the same.

## Claims

1. An electrical household appliance comprising at least one receptacle (23, 25) for receiving heated water, a removable water tank (13) positioned at a height relative to a base portion of said appliance body (5), said water tank (13) being in communication with at least one fluid containment means (37) extending to said base portion and connecting at said base portion to at least a second fluid containment means (36), the latter extending to a height above said base portion and dispensing heated water to said at least one receptacle (23, 25) **characterized in that**
said first and said second fluid containment means (36, 37) function as combined vessels having inner spaces in communication with each other and,
said second fluid containment means (36) extending from said base portion to a height above said base portion comprises heating means arranged longitudinally through said second fluid containment means (36) for heating water throughout the same.

2. An electrical household appliance as set forth in Claim 1 wherein said first and said second fluid containment means' (36, 37) highest portions relative to said base portion are provided at the same height.

3. An electrical household appliance as set forth in Claim 2 wherein said heating means is arranged in the form of an electrical resistance wrapped around said second fluid containment means (36) of metallic material.

4. An electrical household appliance as set forth in Claim 2 wherein said second fluid containment means (36) is in the form of telescopically arranged containment means of metallic material between which a substantially small distance is longitudinally provided and water present around the inner containment means and delimited by the outer containment means is heated by a longitudinal electrical resistance in said inner containment means.

5. An electrical household appliance as set forth in Claim 2 wherein said second fluid containment means (36) is in the form of quartz glass heater tubes (36) coated with a heating film at the surface thereof.

6. An electrical household appliance as set forth in any of the Claims 3 to 5 wherein said removable water tank (13) is in fluid communication with a water supply device (41) through a valve (8).

7. An electrical household appliance as set forth in Claim 6 wherein said valve (8) comprises an axial spring element (9) against which an axial valve piston (12) is moved by a valve pin (40 to open fluid passage from said water tank (13) to said water supply device (41) when said removable water tank (13) is placed on said valve pin (40) integral to said electrical household appliance.

8. An electrical household appliance as set forth in Claim 6 wherein a vacuum elimination device (44) is provided between said water tank (13) and said water supply device (41) such that air allowed inside the body (5) of the appliance reaches an air inlet (42) of said vacuum elimination device (44) opening to said water tank (13) to release vacuum.

9. An electrical household appliance as set forth in Claim 8 wherein said vacuum elimination device (44) comprises an air entrance (43) opening to said water supply device (41) and in communication with said air inlet (42).

10. An electrical household appliance as set forth in any of the Claims 3 to 5 wherein said second fluid containment means (36) effects hot water transfer to a hot water reservoir (35) provided at a height relative to said second fluid containment means (36).

11. An electrical household appliance as set forth in Claim 10 wherein said hot water reservoir (35) is in fluid communication with two separate segments (33, 34) at different heights relative to said water reservoir (35), said segments (33, 34) leading to a single hot water outlet (33).

12. An electrical household appliance as set forth in Claim 11 wherein said hot water outlet (33) is associated with an outlet valve (32) selectively transferring hot water to a brewing outlet (19) and to a hot water outlet (26).

13. An electrical household appliance as set forth in Claim 12 wherein said outlet valve (32) comprises an outlet valve piston (16) controlled by a connection arm (17) relative to the position of a control button (18).

14. An electrical household appliance as set forth in Claim 13 wherein said connection arm (17) moves a brewing receptacle (23) mechanism arm (15), the latter pushing a brewing receptacle (23) microswitch (14) when said brewing receptacle (23) is in its place and an electronic control unit (24) energizes said heating means when said brewing receptacle (23) microswitch (14) is set to the "On" position.

15. An electrical household appliance as set forth in Claim 13 wherein said hot water microswitch (30) is in its "On" position when said outlet valve piston (16) blocks said brewing outlet (19) and opens said hot water outlet (26) by way of said connection arm (17) changing its position by means of said control button (18).
